# EUROPEAN PATENT APPLICATION

(11) **EP 3 981 375 A1**
(43) Date of publication of application: **13.04.2022**
(21) Application number: 20818204.8
(22) Date of filing: 14.05.2020
(51) Int. Cl.: A61J 3/00

(54) **TABLET DIMENSION MEASURING PROGRAM AND TABLET DIMENSION MEASURING SYSTEM**

(30) Priority: 06.06.2019 JP 2019106393
(71) Applicant: Tosho, Inc., Tokyo 144-0033 (JP)
(72) Inventor: OMURA Yoshihito, Tokyo 144-0033 (JP)
(74) Representative: Vossius & Partner Patentanwälte Rechtsanwälte mbB
(86) International application number: PCT/JP2020/019235
(87) International publication number: WO 2020/246211

(57) **Abstract**

Provided is a tablet dimension measuring program for quickly sharing the dimensions of a tablet while ensuring accuracy of the measurement method. The tablet dimension measuring program is a tablet dimension measuring program for capturing an image of a tablet by using: measuring means for measuring a dimension of the tablet; dimension display means for displaying the dimension of the tablet measured by the measuring means; and imaging means for capturing images that each include a numerical value of the dimension displayed by the dimension display means and a measurement position of the tablet, in which the imaging means is used to capture at least one dimension information image that includes the measurement position of the tablet and the numerical value of the dimension and a drug information image with which drug information of the tablet is identifiable.

## Description

### Technical Field

The present invention relates to a tablet dimension measuring program and a tablet dimension measuring system for measuring the dimensions of a tablet and sharing the dimensions of the tablet among remote places.

### Background Art

For a tablet packaging device that individually feeds tablets, a configuration that uses a cassette having rotary vanes for feeding tablets one by one is known (see, for example, PTL 1).

In the cassette, it is desirable to design the sections of the rotary blades so as to correspond to the dimensions of tablets. However, the dimensions of tablets widely vary, and there is a demand for a mechanism for quickly sharing the dimensions of such tablets in order to accelerate manufacturing of the rotary blades.

Here, tablets have various forms, such as an ellipsoidal form and a round pillar form having a convex bottom. If, for example, the height, width, and depth are differently defined or a different position is measured, the

obtained dimensions of the tablet change. Therefore, it is necessary to simultaneously know the measurement method.

A device for measuring the form of a drug by image capturing using, for example, a camera is known (see, for example, PTL 2); however, operating the device alone leads to a high cost, which is a problem.

### Citation List

### Patent Literature

PTL 1: Japanese Unexamined Patent Application Publication No. 2015-12893
PTL 2: Japanese Patent No. 5812228

### Summary of Invention

### Technical Problem

To date, for tablet dimension measurement, for example, only a method in which measurement is performed by using a measuring instrument, such as a vernier caliper, with reference to, for example, a manual and a method in which figures are recorded on the basis of data from the manufacturer of the tablet have been available.

Accordingly, a technical issue addressed by the present invention is to quickly share the dimensions of a tablet while ensuring accuracy of the measurement method. Solution to Problem

A tablet dimension measuring program (solution 1) of the present invention is a tablet dimension measuring program for capturing an image of a tablet by using: measuring means for measuring a dimension of the tablet; dimension display means for displaying the dimension of the tablet measured by the measuring means; and imaging means for capturing images that each include a numerical value of the dimension displayed by the dimension display means and a measurement position of the tablet, in which the imaging means is used to capture at least one dimension information image that includes the measurement position of the tablet and the numerical value of the dimension and a drug information image with which drug information of the tablet is identifiable.

A tablet dimension measuring program (solution 2) of the present invention includes, in addition to the configuration described in solution 1, an image output unit that, when one image among the images captured by the imaging means is displayed, displays the other images captured by the imaging means while reducing sizes of the images together with the one image.

A tablet dimension measuring system (solution 3) of the present invention is a tablet dimension measuring system for measuring a dimension of a tablet by using the program having the configuration described in solution 1 or solution 2, the tablet dimension measuring system including: measuring means for measuring the dimension of the tablet; dimension display means for displaying the dimension of the tablet measured by the measuring means; imaging means for capturing images that each include a numerical value of the dimension displayed by the dimension display means and a measurement position of the tablet; and storing means connected via a network, in which the dimension information image and the drug information image are stored in the storing means.

A tablet dimension measuring system (solution 4) of the present invention includes, in addition to the configuration described in solution 3, image display means for reading and displaying the dimension information image and/or the drug information image stored in the storing means.

A tablet dimension measuring program (solution 5) of the present invention includes: a measuring step of measuring a dimension of a tablet; and an imaging step of capturing a drug information image with which drug information of the tablet is identifiable and a dimension information image that includes a numerical value of the dimension of the tablet measured in the measuring step and a measurement position of the tablet.

### Advantageous Effects of Invention

According to the present invention, it is possible to quickly share the dimensions of a tablet while ensuring accuracy of the measurement method.

### Brief Description of Drawings

[Fig. 1] Fig. 1 is a diagram illustrating an example system configuration of a tablet dimension measuring system of the present invention.
[Fig. 2] Fig. 2 is a diagram illustrating an example of image data captured by imaging means.
[Fig. 3] Fig. 3 is a perspective view illustrating example dimensions and an example external appearance of a tablet.
[Fig. 4] Fig. 4 is a front view illustrating example dimensions and an example external appearance of the tablet.
[Fig. 5] Fig. 5 is a top view illustrating example dimensions and an example external appearance of the tablet.
[Fig. 6] Fig. 6 is a diagram illustrating an example configuration of a cassette having rotary blades as an example of using dimension data.
[Fig. 7] Fig. 7 is a diagram illustrating an example operation of the tablet dimension measuring system of the present invention.
[Fig. 8] Fig. 8 is a diagram illustrating an example of a drug information image in an embodiment of the present invention.
[Fig. 9] Fig. 9 is a diagram illustrating an example of image data stored in the embodiment of the present invention.
[Fig. 10] Fig. 10 is a diagram illustrating another example of image data stored in the embodiment of the present invention.
[Fig. 11] Fig. 11 is a diagram illustrating another example of image data stored in the embodiment of the present invention.
[Fig. 12] Fig. 12 is a diagram illustrating example display of images captured by an image capturing device.
[Fig. 13] Fig. 13 is a diagram illustrating a modification of image data stored in the embodiment of the present invention.

### Description of Embodiments

A specific embodiment that is an example of the tablet dimension measuring system of the present invention will be described with reference to the drawings.

In the drawings, configurations necessary for describing the present invention and those related to the present invention are mainly illustrated for, for example, simplification.

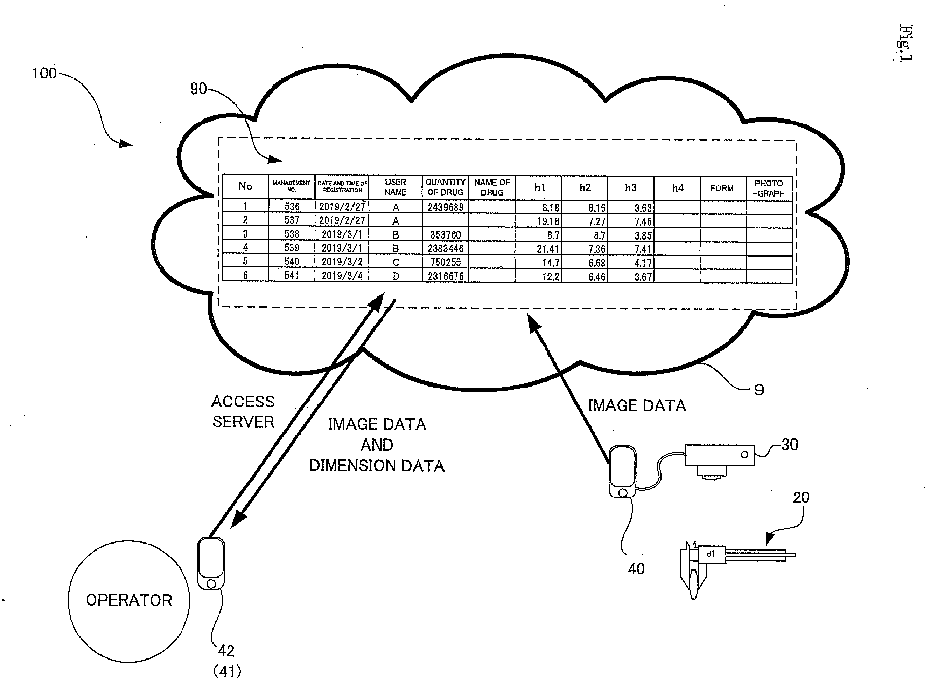

As illustrated in Fig. 1, a tablet dimension measuring system 100 includes a vernier caliper 20, which is measuring means for measuring a dimension of a tablet 10, a camera 30, which is imaging means for capturing an image of the use state of the vernier caliper 20, and a terminal 40 that includes transmission means for transmitting image data captured by the camera 30 to a server 90 via a network 9.

The tablet dimension measuring system 100 further includes a portable terminal 42 that includes an application 41 for reading a plurality of pieces of image data from the server 90.

In this embodiment, the vernier caliper 20 is a digital vernier caliper meter and has a base part 21 that serves as a reference for measuring a length and a movable part 22 that is supported by the base part 21. The vernier caliper 20 is measuring means for measuring the distance d1 between an end part 21a of the base part 21 and a movable end part 22a of the movable part 22 as a dimension of the tablet 10 while the tablet 10 is placed so as to be sandwiched between the end part 21a and the movable end part 22a.

The vernier caliper 20 includes a display unit 23, which is dimension display means for displaying the distance d1 between the end part 21a and the movable end part 22a as a measurement result. Although the display unit 23 is configured to display the distance d1 as digital display in this embodiment, the display unit 23 is not limited to such a configuration.

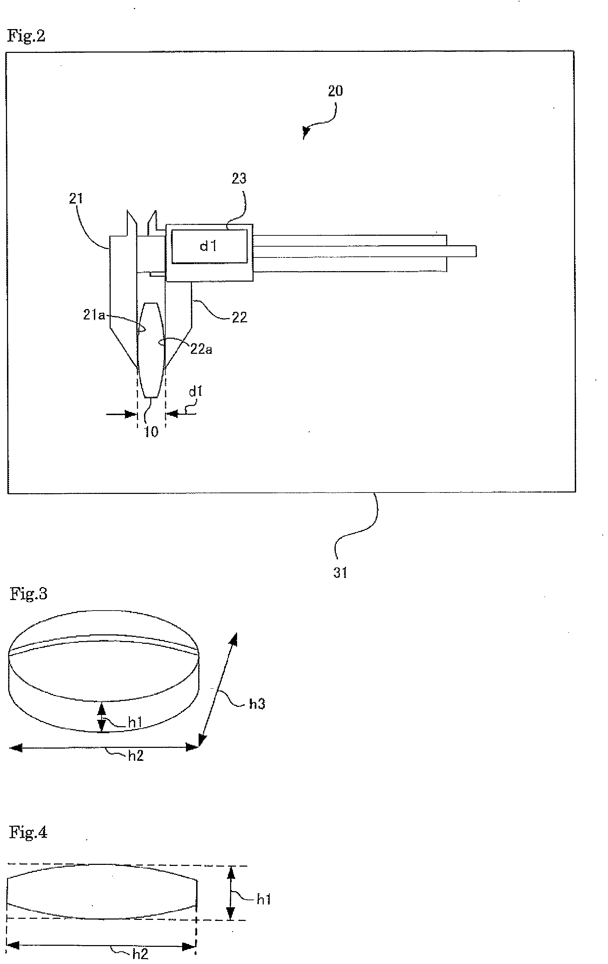

The camera 30 is imaging means for capturing an image of the end part 21a and the movable end part 22a of the vernier caliper 20, the tablet 10, and the display unit 23 so as to fit in an imaging area 31 of the camera 30 as illustrated in Fig. 2. Note that the camera 30 may be a camera that is included in the terminal 40, which is, for example, a portable phone, or may be an image capturing device, such as a digital camera, provided separately from the terminal 40.

Image data thus captured by the camera 30 is transmitted by the terminal 40 to the server 90 via the network 9 and stored.

Although the tablet 10 is an unspecified drug that can have various forms, in this embodiment, for example, the tablet 10 having a lens form as illustrated in Fig. 3 to Fig. 5 is specifically described. Note that the tablet 10 is not limited to such a form and may have other forms, such as a capsule form, a disc form, a spherical form, and an ellipsoidal form.

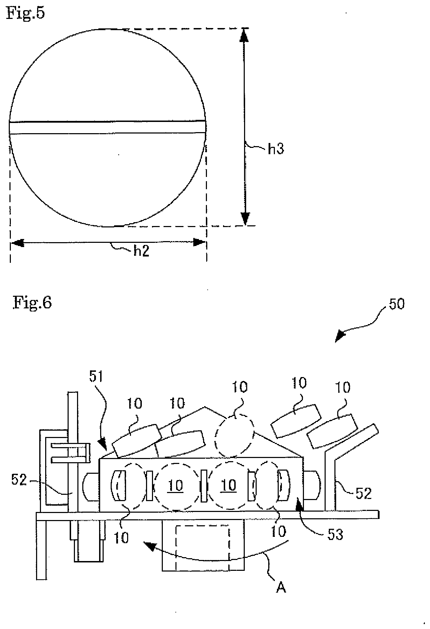

Meanwhile, as a kind of drug cassette used in a packaging machine for separately packaging the tablets 10, a cassette 50 having rotary blades 51 for feeding the tablets 10 one by one as illustrated in Fig. 6 is known.

The cassette 50 thus configured is known as a configuration in which, although the detailed configuration is omitted, the rotary blades 51 are rotated in the A direction and the tablets 10 are put into a space 53 between the rotary blade 51 and a casing 52 one by one to thereby drop the tablets 10 individually.

That is, in order to make the tablet 10 fit right into the space 53, the form of the rotary blades 51 of the cassette 50 needs to be designed so as to correspond to the dimensions of the tablet 10.

The dimensions of the tablet 10 can be easily measured by using, for example, the vernier caliper 20.

However, as described above, tablets have various forms. In a case where, for example, the dimensions are to be uniformly expressed by three lengths, namely, a height h1, a width h2, and a depth h3, the definitions of the height, width, and depth readily change depending on, for example, the placing direction of the tablet 10.

Further, regarding the manner in which the vernier caliper 20 is used, it is not known whether the vernier caliper 20 is used in a correct manner, which is also a problem.

In a case where a place where the rotary blades 51 are manufactured and a place where the tablet 10 is measured are, for example, remote places away from each other, a problem occurs in which corrections of dimensions to be made because, for example, the dimensions of the tablet 10 are different or the manner in which the vernier caliper 20 is used is wrong are difficult.

The present invention has been made in order to address the above-described technical issue. The tablet dimension measuring system 100 in this embodiment includes the vernier caliper 20 for measuring a dimension of the tablet 10, the display unit 23 that displays the dimension of the tablet 10 measured by the vernier caliper 20, and the camera 30 that captures an image including a numerical value of the dimension displayed by the display unit 23 and the measurement position of the tablet 10.

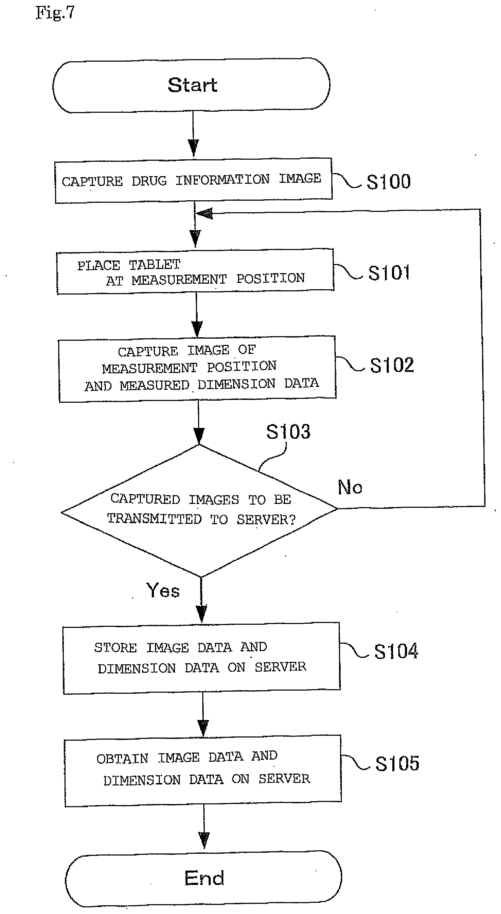

An operation of measuring the dimensions of the tablet 10 by using the tablet dimension measuring system 100 thus configured is described with reference to the flowchart as illustrated in Fig. 7.

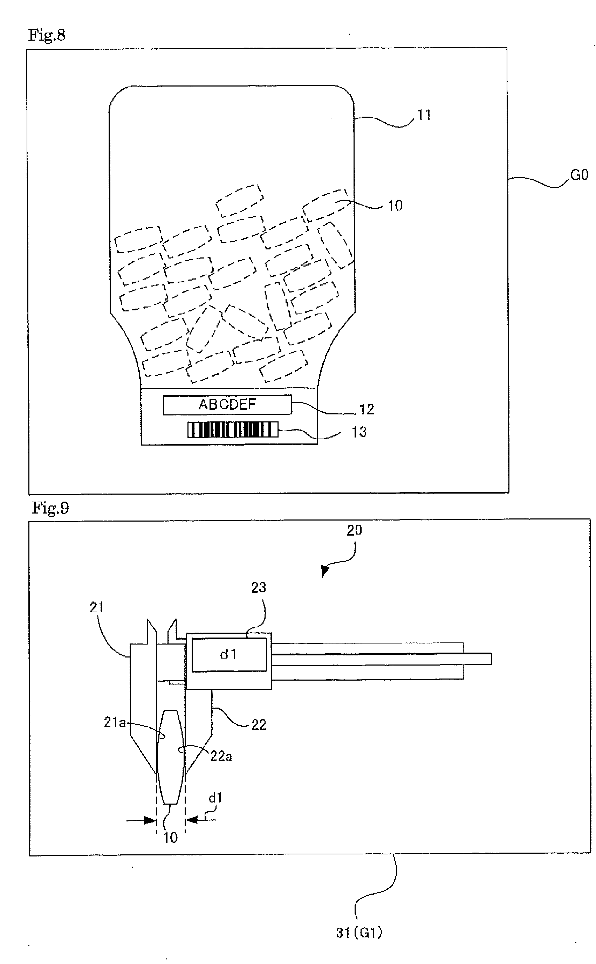

First, an operator uses the camera 30 to capture a drug information image with which drug information on a package 11 that functions as a container of the tablets 10 as illustrated in Fig. 8 can be identified (step S100).

The drug information here may be any information as long as the tablets 10 can be identified with the captured image, and may be, for example, the external appearance of the package 11 and include a drug name 12 or a barcode 13 printed on the package 11. In this embodiment, as illustrated in Fig. 8, an image of the package 11 on which the drug name 12 and the barcode 13 are printed is used as an example drug information image G0.

Next, the operator places the tablet 10 between the end part 21a and the movable end part 22a of the vernier caliper 20 and moves the movable part 22 of the vernier caliper 20 to fix the position such that the tablet 10 is sandwiched between the end part 21a and the movable end part 22a (step S101) .

In step S101, on the display unit 23 of the vernier caliper 20, the distance d1 between the end part 21a and the movable end part 22a is displayed as a dimension of the tablet 10.

Next, the camera 30 is used to capture image data of the display unit 23, the tablet 10, and the end part 21a and the movable end part 22a of the vernier caliper 20 so as to fit in the imaging area 31 (step S102).

The image captured in step S102 is image data that includes the display unit 23 on which d1 is displayed and that serves as a dimension information image including the measurement position of the tablet 10 and the numerical value d1 measured for the measurement position as illustrated in, for example, Fig. 9.

After at least one dimension information image and the drug information image G0 of the tablet 10 are captured as illustrated in steps S100 to S102, the terminal 40 determines whether to transmit these pieces of image data captured by the camera 30 to the server 90 (step S103).

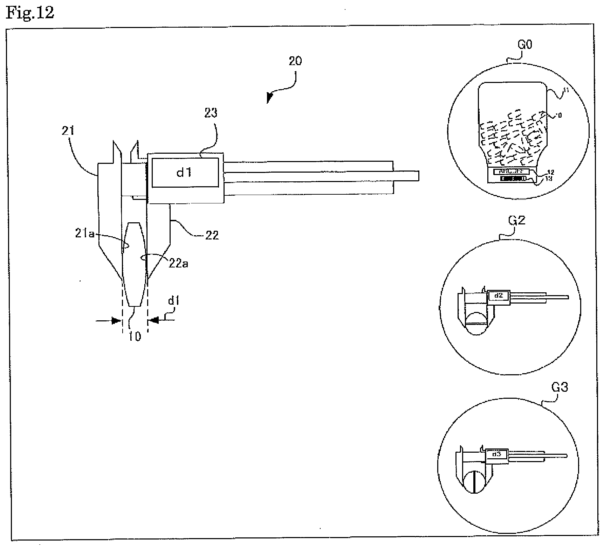

At this time, as illustrated in Fig. 12, the terminal 40 may arrange the drug information image G0, second image data G2, and third image data G3 along the edge of the screen as thumbnail images while displaying first image data G1.

That is, the tablet dimension measuring system 100 includes the terminal 40, which functions as an image output unit that, when one of the images captured by the camera 30 is displayed, displays the other images captured by the camera 30 while reducing the sizes thereof together with the one image.

When the other images are displayed as thumbnail images, display can be easily switched among the first to third image data by a tap operation on the terminal 40. At the same time, the measurement position of the tablet 10 and drug information can be easily checked.

In a case where it is decided not to transmit in step S103, the operator changes the measurement position from, for example, the height h1 to the width h2 and repeats the process in steps S101 and S102.

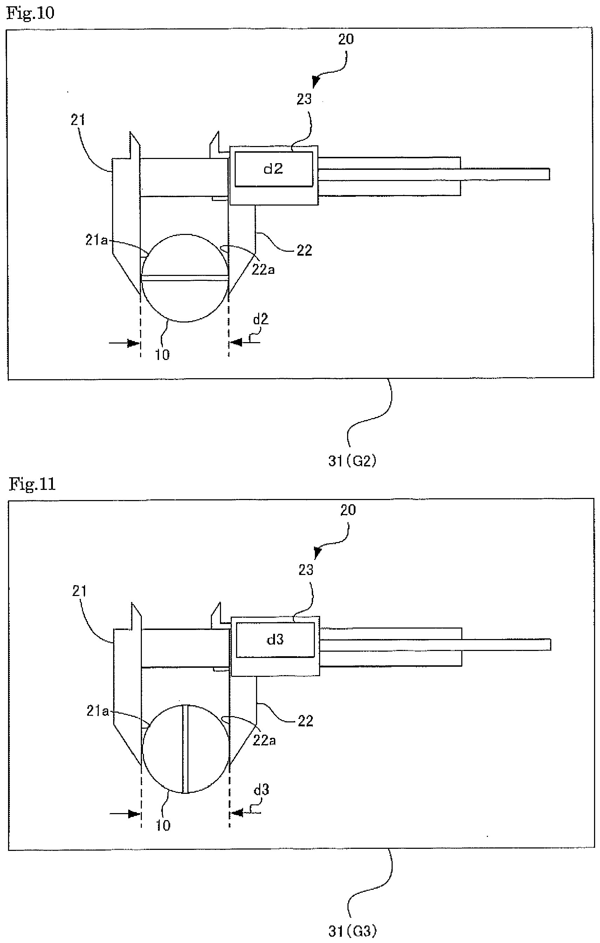

At this time, an image captured in step S102 is the second image data G2 that includes the display unit 23 on which a numerical value d2 corresponding to the width h2 and different from the numerical value d1 is displayed and that includes the measurement position of the tablet 10 and the numerical value d2 measured for the measurement position as illustrated in, for example, Fig. 10.

On the terminal 40, the numerical values d1 and d2 that correspond to pieces of measurement data of the dimensions of the tablet 10 and the measurement positions h1 and h2 of the tablet 10 when the pieces of measurement data are obtained are stored as dimension information images.

When the process in steps S101 and S102 is repeated at least three times, the drug information image G0 captured in step S100, the numerical values d1, d2, and d3 that correspond to pieces of dimension data corresponding to at least three measurement positions, namely, the height h1, the width h2, and the depth h3, of the tablet 10, and the first to third image data G1 to G3 that correspond to the respective numerical values are stored on the terminal 40 as illustrated in Fig. 12. At this time, the third image data G3 is an image as illustrated in, for example, Fig. 11.

In a case of the tablet 10 having a typical form, the dimensions and the form are clarified by measuring at least three pieces of dimension data, namely, the height h1, the width h2, and the depth h3. In a case of the tablet 10 not having a typical form, a plurality of dimensions may be further obtained.

In a case where the tablet 10 has a simple form, such as a spherical form or a disc form, and a large number of dimension information images are not necessary, a dimension information image or dimension information images of at least one or two of the height h1, the width h2, and the depth h3 may be obtained.

When the terminal 40 makes a connection to the server 90 via the network 9, in accordance with an account or the terminal 40 connected to the server 90, for example, information about a place where the drug information image G0 and the first to third image data G1 to G3 are captured, the date and time of registration, and the user name may be included as illustrated in Fig. 1.

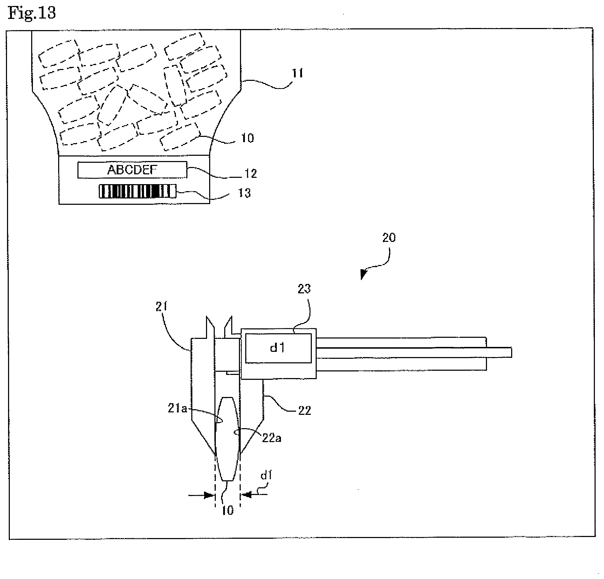

Although this embodiment assumes that the drug information image G0 is an image different from a dimension information image, an image of the barcode 13 and the drug name 12 on the package 11 may be captured simultaneously with capturing of the first image data G1 as a dimension information image as illustrated in Fig. 13 to include the dimension information image and the drug information image in one piece of image data.

In a case where it is decided to transmit the captured pieces of image data in step S103, the server 90 saves the drug information image G0 captured in step S100 in a state where the drug name 12 can be identified (step S104). At the same time, the server 90 stores a single piece or a plurality of pieces of image data captured in steps S101 and S102 as the first image data G1, the second image data G2, and/or the third image data G3 and saves the measured numerical values d1, d2, and d3 in a database as pieces of measurement data corresponding to the first image data G1, the second image data G2, and the third image data G3 (step S104) .

Here, the numerical values d1, d2, and d3 may be read by the server 90 or the terminal 40 by image recognition or may be input manually with reference to display on the display unit 23.

In any case, the numerical values d1, d2, and d3 are stored on the server 90 as pieces of dimension data of the tablet 10.

In step S104, on the server 90, the pieces of measurement data of the dimensions of the tablet 10 and the measurement positions of the tablet 10 when the pieces of measurement data are obtained are stored as dimension information images. At the same time, the drug information image G0 that includes the package 11 of the tablet 10 is also stored on the server 90.

That is, when the application 41 of the portable terminal 42 reads the first image data G1, the second image data G2, and the third image data G3 from the server 90 (step S105), the measurement positions h1, h2, and h3 of the tablet 10 and the numerical values d1, d2, and d3 of the measured dimensions can be shared among remote places.

Here, the application 41 is an application program for display different from an application program for image capturing used in image capturing by the terminal 40.

The application 41 may rearrange, for example, the height h1, the width h2, and the depth h3, and the corresponding first to third image data G1 to G3 in a specific order or in the ascending order of the numerical values d1 to d3 of the measured dimensions.

As illustrated in Fig. 12, while displaying the first image data G1, the application 41 may arrange the second image data G2 and the third image data G3 along the edge of the screen as thumbnail images.

That is, the tablet dimension measuring system 100 displays the first to third image data while reducing the sizes thereof. At this time, the portable terminal 42 functions as an image output unit that, when one of the images captured by the camera 30 is displayed, displays the other images captured by the camera 30 while reducing the sizes thereof together with the one image.

When the other images are thus displayed as thumbnail images, display can be easily switched among the first to third image data by a tap operation on the portable terminal 42.

Further, for the tablet 10 that is a specific tablet, whether the measurement positions of the tablet 10 are correct can be easily checked on the application 41.

Although a preferred embodiment of the present invention has been described above, the present invention is not limited to the specific embodiment, and various modifications and changes can be made without departing from the spirit of the present invention described in the claims unless otherwise specifically limited in the above description.

For example, in this embodiment, an embodiment of a system in which the terminal 40, the portable terminal 42, and the server 90 are connected to each other via the network 9 is illustrated as the tablet dimension measuring system 100. For example, a method in which image data and dimension data are combined and saved may be implemented as a program for executing means described as step S101 to step S106 or as various storage media in which the program is stored.

Effects enumerated in the embodiment of the present invention are only preferred effects produced from the present invention, and effects produced by the present invention are not limited to those described in the embodiment of the present invention.

### Reference Signs List

9 network, 10 tablet, 11 drug information (package), 12 drug information (drug name), 13 drug information (barcode), 20 measuring means (vernier caliper), 23 dimension display means (display unit), 30 imaging means (camera), 40 terminal (transmission means), 100 tablet dimension measuring system
90 server
G0 drug information image, G1 first image data, G2 second image data, G3 third image data
h1, h2, h3 measurement position
d1, d2, d3 dimension of tablet (numerical value) (dimension data)

## Claims

1. A tablet dimension measuring program for capturing an image of a tablet by using:
measuring means for measuring a dimension of the tablet;
dimension display means for displaying the dimension of the tablet measured by the measuring means; and
imaging means for capturing images that each include a numerical value of the dimension displayed by the dimension display means and a measurement position of the tablet, wherein
the imaging means is used to capture at least one dimension information image that includes the measurement position of the tablet and the numerical value of the dimension and a drug information image with which drug information of the tablet is identifiable.

2. The tablet dimension measuring program according to Claim 1, further comprising
an image output unit that, when one image among the images captured by the imaging means is displayed, displays the other images captured by the imaging means while reducing sizes of the images together with the one image.

3. A tablet dimension measuring system for measuring a dimension of a tablet by using the tablet dimension measuring program according to Claim 1 or 2, the tablet dimension measuring system comprising:
measuring means for measuring the dimension of the tablet;
dimension display means for displaying the dimension of the tablet measured by the measuring means;
imaging means for capturing images that each include a numerical value of the dimension displayed by the dimension display means and a measurement position of the tablet; and
storing means connected via a network, wherein
the dimension information image and the drug information image are stored in the storing means.

4. The tablet dimension measuring system according to Claim 3, further comprising
image display means for reading and displaying the dimension information image and/or the drug information image stored in the storing means.

5. A tablet dimension measuring program comprising:
a measuring step of measuring a dimension of a tablet; and
an imaging step of capturing a drug information image with which drug information of the tablet is identifiable and a dimension information image that includes a numerical value of the dimension of the tablet measured in the measuring step and a measurement position of the tablet.
